# FASCICULE DE BREVET EUROPEEN

(11) **EP 1 408 258 B1**
(45) Date de publication et mention de la délivrance du brevet: **04.01.2006**
(21) Numéro de dépôt: 03292486.2
(22) Date de dépôt: 08.10.2003
(51) Int. Cl.: F16H 57/04

(54) **Boîte de vitesse de véhicule automobile permettant une lubrification appropriée en virage**
Fahrzeuggetriebe mit Einrichtung zur Sicherstellung der Schmierung bei Kurvenfahrt
Vehicle gearbox ensuring a suitable lubrication while cornering

(30) Priorité: 08.10.2002 FR 0212480
(43) Date de publication de la demande: 14.04.2004
(73) Titulaire: Peugeot Citroen Automobiles SA, 78140 Vélizy Villacoublay (FR)
(72) Inventeur: Wilhelmy, Norbert, 57590 Viviers (FR)
(74) Mandataire: Seytre, Françoise

(56) Documents cités:
- FR-A- 1 383 283
- US-A- 4 644 815

## Description

La présente invention concerne une boite de vitesses comprenant un carter, une première ouverture pratiquée dans le fond du carter adaptée pour recevoir l'extrémité d'une ligne d' axe de ladite boite sur laquelle est implantée, à l'intérieur du carter, un pignon de marche arrière, deux respectivement deuxième et troisième ouvertures également pratiquées dans le fond du carter adaptées pour recevoir chacune l'extrémité d'une ligne d'arbre creux sur laquelle est implantée, à l'extérieur du carter, au moins un pignon de marche avant, une pluralité d'ouvertures également pratiquées dans le fond du carter de diamètre inférieur à celui de la première, deuxième et troisième ouverture et adaptées pour recevoir chacune l'extrémité de l'axe d'une fourchette et un couvercle fixé au fond du carter à l'extérieur de celui-ci de telle sorte que les pignons de marche avant sont implantés entre la face extérieure du carter et le couvercle.

Elle a plus particulièrement pour application les boites de vitesses équipant les véhicules automobiles.

Le document FR 1 383 283, considéré comme l'état de la technique le plus proche, décrit une boîte de vitesse comprenant un carter avec trois ouvertures pratiquées dans le fond du carter et adaptées pour recevoir l'extrémité de trois lignes d'arbres de ladite boîte. Un des axes est percé, prolongé et adapté pour laisser passer de l'huile provenant de l'espace compris entre le couvercle et le fond du carter vers l'intérieur du carter.

La lubrification des éléments mécaniques qui constituent une boite de vitesses mécanique est généralement assurée par les projections d'huiles générées par les barbotages des engrenages de la boite en fonctionnement.

Dans les boites de vitesse mécaniques équipant les véhicules automobiles, le comportement du véhicule et, en particulier, l'inclinaison que peut prendre la boite de vitesses en fonction des conditions de roulage peut influer directement sur l'importance de ces barbotages et, donc, sur le niveau de lubrification des éléments mécaniques qui la constituent.

Ainsi, il s'avère que, pour un certain type de boite de vitesses qui comprennent un compartiment dit « cinquième », la lubrification des dentures des pignons moteur et récepteur du cinquième rapport implantés entre le fond du carter et du couvercle qui les protègent n'est pas suffisante parfois.

En effet, il a été constaté que lorsque le véhicule qui est équipé de cette boite est en roulage en ligne droite, la lubrification dudit compartiment est suffisante, tandis que lorsque le véhicule amorce un virage, et en particulier un virage à gauche, l'huile de lubrification s'échappe dudit compartiment par l'ouverture du puits de marche arrière et par une autre ouverture de diamètre moins important dit « trou de retour d'huile » et rentre à l'intérieur du carter de boite de vitesses.

Cette absence d'huile dudit compartiment provoque une usure anormale et prématurée de la denture des pignons moteur et récepteur du cinquième rapport qui elle-même provoque un bruit dit « de sirènage » qui n'est que très peu perceptible dans l'habitacle du véhicule.

Le but de l'invention est de proposer une amélioration au type de boite de vitesses précité afin d'améliorer encore le confort acoustique du véhicule automobile qui en est équipé.

Pour ce faire, l'invention a pour objet une boite de vitesses comprenant un carter, une première ouverture pratiquée dans le fond du carter adaptée pour recevoir l'extrémité d'une ligne d'axe de ladite boite sur laquelle est implantée, à l'intérieur du carter, un pignon de marche arrière, deux respectivement deuxième et troisième ouvertures également pratiquées dans le fond du carter adaptées pour recevoir chacune l'extrémité d'une ligne d'arbre creux sur laquelle est implantée, à l'extérieur du carter, au moins un pignon de marche avant, une pluralité d'ouvertures également pratiquées dans le fond du carter de diamètre inférieur à celui de la première, deuxième et troisième ouverture et adaptées pour recevoir chacune l'extrémité de l'axe d'une fourchette et un couvercle fixé au fond du carter à l'extérieur de celui-ci de telle sorte que les pignons de marche avant sont implantés entre la face extérieure du carter et le couvercle, caractérisée en ce que la première ouverture est obturée par une pièce comprenant un corps percé prolongé par un embout adaptée pour laisser passer de l'huile provenant de l'espace compris entre le couvercle et le fond du carter vers l'intérieur du carter et en ce que ledit perçage du corps et ceux des lignes d'arbres creux constituent les uniques passages de l'huile provenant de l'espace compris entre le couvercle et le fond du carter vers l'intérieur du carter.

Une telle solution permet d'assurer une lubrification en quantité suffisante de la denture des pignons du couple cinquième rapport, évitant ainsi une usure anormale de la boite de vitesses.

Une telle solution permet également d'assurer une circulation minimale de l'huile entre l'intérieur du carter de boite de vitesses et l'espace compris entre le carter et le couvercle dit « compartiment cinquième » tout en laissant une quantité minimale d'huile à l'intérieur de ce compartiment.

Une telle solution permet en outre de supprimer le bruit de sirènage évoqué ci-dessus.

Enfin, cette solution évite un démontage de la boite de vitesses pour un changement de pignons anormalement usés tel que ceux équipant la boite de vitesses selon l'état de l'art.

Selon une caractéristique de l'invention, les pignons de marche avant implantés à l'extérieur du carter de boite de vitesses sont respectivement le pignon moteur et le pignon récepteur du cinquième rapport de marche avant.

Avantageusement, la pièce d'obturation de la première ouverture est une pièce monobloc.

De préférence, la pièce d'obturation de la première ouverture est une pièce moulée en matière synthétique.

Selon une caractéristique avantageuse, l'embout présente un biseau dans sa partie extrême dont la forme est adaptée pour épouser substantiellement celui du couvercle.

De préférence encore, le couvercle est métallique.

D'autres caractéristiques et détails avantageux ressortiront mieux à la lecture de la description détaillée d'une exemple de réalisation de l'invention faite en référence aux figures 1 à 3 qui représentent respectivement :
- figure 1 : une vue en perspective d'un carter de boite de vitesses selon l'état de l'art non muni du couvercle de compartiment « cinquième » ;
- figure 2 : une vue en perspective d'un carter de boite de vitesses selon l'invention muni du couvercle de compartiment « cinquième » ;
- figure 3 : une vue en perspective d'une pièce d'obturation utilisée dans la boite de vitesses selon l'invention.

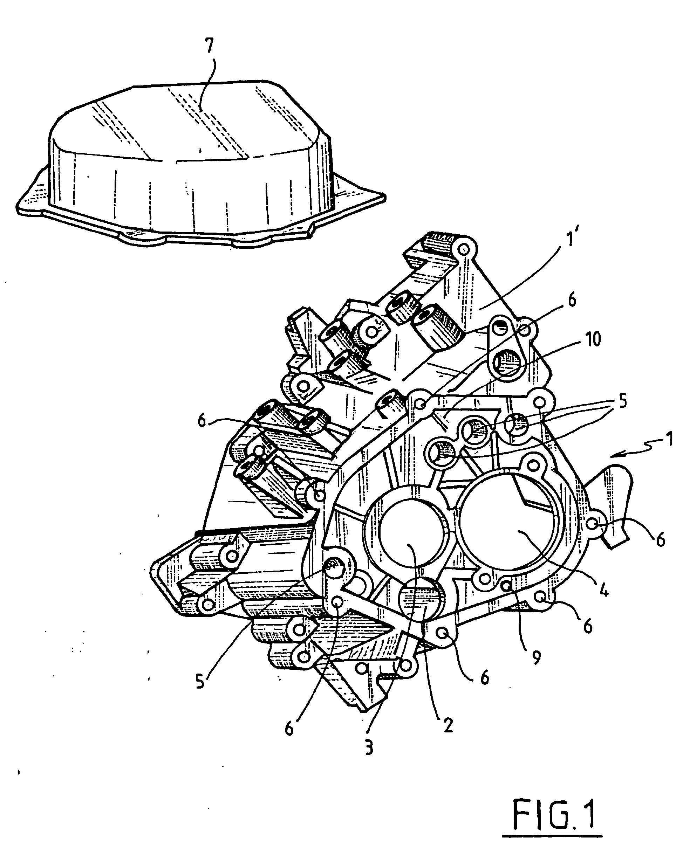

La figure 1 est une vue en perspective d'un carter 1 d'une boite de vitesses 1' selon l'état de l'art. Ce carter 1 réalisé en fonte est percé en son fond 10 tout d'abord d'une ouverture 2 débouchante prévue pour loger l'axe de marche arrière de la boite de vitesses.

Il est également percé de deux ouvertures circulaires débouchantes 3,4 à travers lesquelles passent les extrémités des lignes d'arbre primaire et secondaire de la boite de vitesses sur lesquelles sont montés respectivement le pignon moteur et récepteur du cinquième rapport de marche avant non représentés ici.

Il est percé d'une pluralité d'ouvertures circulaires débouchantes 5 de plus faible diamètre prévues pour loger les axes de fourchette qui commandent le déplacement de manchons de synchroniseurs non représentés ici également. Il est également percé d'une pluralité de trous filetés 6 réalisés dans les bossages qui permettent de recevoir les tiges filetées de fixation d'un couvercle 7 qui définit un compartiment dit « compartiment cinquième » dans lequel sont implantés les dits pignons récepteur et moteur du cinquième rapport.

Il est enfin percé d'un trou débouchant 8 qui permet de laisser passer l'huile entre le compartiment cinquième et l'intérieur du carter.

Avec ce carter, le passage de l'huile pour permettre normalement une lubrification des dentures des pignons moteur et récepteur dans cette boite de vitesses est assuré d'une part par le trou 8 décrit ci-dessus et d'autre part par l'ouverture 2 de la marche arrière.

Des essais ont été réalisés sur un véhicule automobile équipé d'une boite de vitesses avec un carter tel que décrit. En effet,au préalable, il est apparu que cette boite de vitesses émettait un bruit lors du roulage du véhicule. Ce bruit se traduisait par un bruit de sirène dans l'habitacle du véhicule.

Ces essais ont permis de trouver la cause de ce bruit. En effet, bien qu'en roulage en ligne droite, la lubrification du compartiment cinquième soit suffisante et donc celle des pignons moteur et récepteur également, à l'amorce d'un virage à gauche du véhicule, l'huile s'échappe par l'ouverture de marche arrière 2 et par le trou de retour d'huile 9 et retourne à l'intérieur du carter.

Cette absence d'huile dans le compartiment provoque une usure anormale et prématurée de la denture des pignons moteur et récepteur cinquième. Cette usure provoque alors le bruit de « sirène » évoqué ci-dessus.

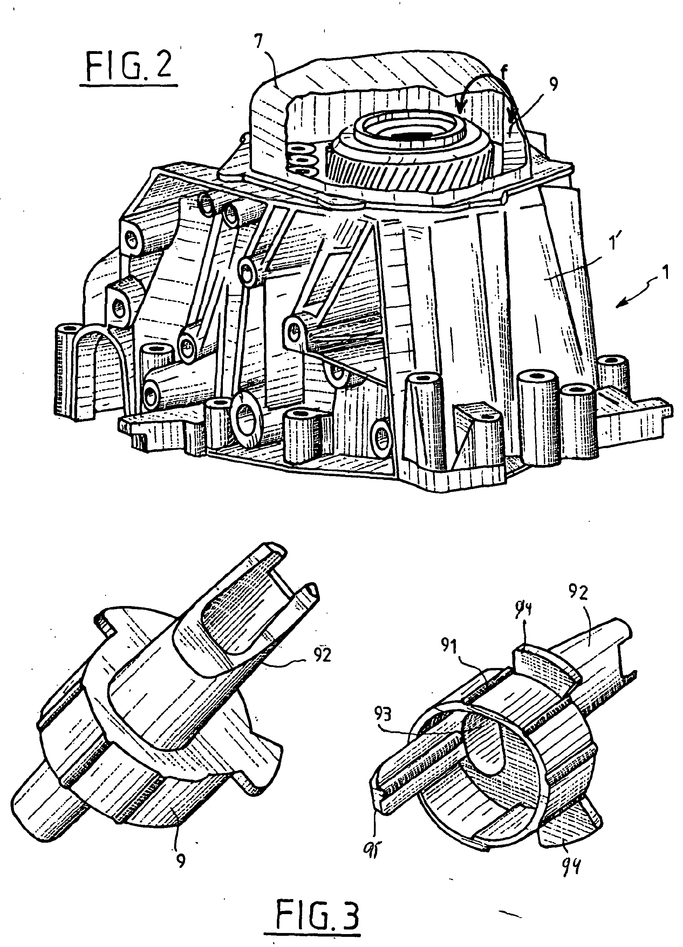

Pour résoudre ce problème de manque d'huile dans le compartiment cinquième, les inventeurs proposent un carter de boite de vitesses selon la figure 2.

Par souci de clarté, le carter représenté reprend les mêmes références que celles données au carter selon l'état de l'art pour les parties en commun.

Dans ce carter, le trou de retour d'huile 8 a été supprimé et un déflecteur d'huile 10 a été placé dans l'ouverture de marche arrière. Cette modification assure en permanence la présence d'huile dans le compartiment cinquième permettant ainsi une lubrification suffisante de la denture des pignons moteur et récepteur du cinquième rapport.

Le déflecteur d'huile 9 est une pièce monobloc réalisée en plastique et présente un corps 91 de section circulaire au diamètre égal à celui de l'ouverture de marche arrière et prolongé par une goulotte 92 dont l'extrémité libre a une forme biseautée afin d'épouser substantiellement le couvercle de cinquième.

Le corps 91 est également percé d'un canal 93 permettant le passage de l'huile de l'intérieur de l'arbre de marche arrière au compartiment cinquième comme il est représenté sur la figure 2 (voir flèche f indiquant le parcours, suivi par l'huile). Ce canal de faible ouverture permet en outre de réduire le débit d'huile vers le carter.

Comme visible sur la figure 3, le déflecteur 9 présente également deux pattes 94 identiques et disposées à 120° en bout du corps 91.

Ces pattes 94 permettent d'orienter le déflecteur par rapport au matériau brut du carter de boite de vitesses.

Le déflecteur 9 présente enfin un patte longitudinale 95 agencée dans l'axe du canal 93 et qui permet de compenser par rapport à la dépouille du carter.

Cette modification permet d'obtenir une circulation de l'huile entre les deux compartiments de la boite de vitesses tout en laissant une quantité minimale dans le compartiment cinquième.

Il va de soi que d'autres modifications ou améliorations peuvent être apportées au carter de boite de vitesses selon l'invention sans pour autant sortir du cadre de l'invention.

Par exemple, le déflecteur peut prendre d'autres dimensions, formes......

De même, l'invention peut s'appliquer à tout autre type de boite qui comprend deux compartiments et dans lequel la lubrification du compartiment extérieur à celui défini par l'intérieur du carter est insuffisante pour les éléments mécaniques qui y sont implantés à l'intérieur.

## Revendications

1. Boite de vitesses (1) comprenant un carter (1'), une première ouverture (2) pratiquée dans le fond (10) du carter adaptée pour recevoir l'extrémité d'une ligne d'axe de ladite boite sur laquelle est implantée, à l'intérieur du carter, un pignon de marche arrière, deux respectivement deuxième et troisième ouvertures (3,4) également pratiquées dans le fond du carter adaptées pour recevoir chacune l'extrémité d'une ligne d'arbre creux sur laquelle est implantée, à l'extérieur du carter, au moins un pignon de marche avant, une pluralité d'ouvertures (5) également pratiquées dans le fond du carter de diamètre inférieur à celui de la première, deuxième et troisième ouvertures et adaptées pour recevoir chacune l'extrémité de l'axe d'une fourchette et un couvercle (7) fixé au fond du carter à l'extérieur de celui-ci de telle sorte que les pignons de marche avant sont implantés entre la face extérieure du carter et le couvercle, **caractérisée en ce que** la première ouverture (2) est obturée par une pièce (9) comprenant un corps (91) percé prolongé par un embout (92) adaptée pour laisser passer de l'huile provenant de l'espace compris entre le couvercle et le fond du carter vers l'intérieur du carter et **en ce que** le perçage (93) du corps et ceux des lignes d'arbres creux de marche avant (3,4) constituent les uniques passages de l'huile provenant de l'espace compris entre le couvercle et le fond du carter vers l'intérieur du carter.

2. Boite de vitesses selon la revendication 1, **caractérisée en ce que** les pignons de marche avant implantés à l'extérieur du carter de boite de vitesses sont respectivement le pignon moteur et le pignon récepteur du cinquième rapport de marche avant.

3. Boite de vitesses selon la revendication 1 ou 2, **caractérisée en ce que** la pièce d'obturation (9) de la première ouverture est une pièce monobloc.

4. Boite de vitesses selon l'une quelconque des revendications précédentes, **caractérisée en ce que** la pièce d'obturation de la première ouverture (9) est une pièce moulée en matière synthétique.

5. Boite de vitesses selon l'une quelconque des revendications précédentes, **caractérisée en ce que** l'embout présente un biseau dans sa partie extrême dont la forme est adaptée pour épouser substantiellement celui du couvercle.

6. Boite de vitesses selon l'une quelconque des revendications précédentes, **caractérisée en ce que** le couvercle (7) est métallique.

## Patentansprüche

1. Getriebe (1) mit einem Gehäuse (1'), einer ersten Öffnung (2) im Boden (10) des Gehäuses zur Aufnahme des Endes einer Achsleitung des Getriebes, an der innerhalb des Gehäuses ein Zahnrad für den Rückwärtsgang vorgesehen ist, mit einer zweiten und dritten Öffnung (3, 4) im Boden des Gehäuses, die jeweils das Ende einer Hohlwellenleitung aufnehmen können, an der außerhalb des Gehäuses mindestens ein Zahnrad für einen Vorwärtsgang vorgesehen ist, mit mehreren Öffnungen (5) im Boden des Gehäuses, deren Durchmesser kleiner ist als der Durchmesser der ersten, zweiten und dritten Öffnung und die jeweils das Achsende einer Gabel aufnehmen können, und mit einem Deckel (7), der am Boden des Gehäuses an dessen Außenseite derart befestigt ist, dass die Vorwärtsgang-Zahnräder zwischen der Außenseite des Gehäuses und dem Deckel vorgesehen sind, **dadurch gekennzeichnet, dass** die erste Öffnung (2) durch ein Teil (9) verschlossen ist, das einen durchbohrten Körper (91) aufweist, der von einem Ansatz (92) verlängert wird, welcher das Öl aus dem Raum zwischen dem Deckel und dem Boden des Gehäuses ins Gehäuseinnere lässt, und **dadurch**, dass die Bohrung (93) des Körpers und die Bohrungen (3, 4) der Vorwärtsgang-Hohlwellenleitungen die einzigen Durchgänge für das Öl aus dem Raum zwischen dem Deckel und dem Boden des Gehäuses ins Gehäuseinnere darstellen.

2. Getriebe nach Anspruch 1, **dadurch gekennzeichnet, dass** die außerhalb des Getriebegehäuses vorgesehenen Vorwärtsgang-Zahnräder das Antriebszahnrad beziehungsweise das Abtriebszahnrad für den fünften Vorwärtsgang sind.

3. Getriebe nach Anspruch 1 oder 2, **dadurch gekennzeichnet, dass** das Teil (9) zum Verschließen der ersten Öffnung aus einem Stück ist.

4. Getriebe nach einem der vorhergehenden Ansprüche, **dadurch gekennzeichnet, dass** das Teil (9) zum Verschließen der ersten Öffnung aus Kunststoff gegossen ist.

5. Getriebe nach einem der vorhergehenden Ansprüche, **dadurch gekennzeichnet, dass** der Ansatz in seinem Endabschnitt eine Abschrägung aufweist, die im Wesentlichen der Form des Dekkels angepasst ist.

6. Getriebe nach einem der vorhergehenden Ansprüche, **dadurch gekennzeichnet, dass** der Deckel (7) aus Metall ist.

## Claims

1. Gear box (1) comprising a housing (1'), a first opening (2) made in the bottom (10) of the housing adapted to receive the end of an axis line of said gear box, on which there is installed, inside the housing, a reverse gear, two second and third openings respectively (3, 4) also made in the bottom of the housing, which are each adapted to receive the end of a hollow line shaft, on which there is installed, outside the housing, at least one forward gear, a plurality of openings (5) also made in the bottom of the housing, having a diameter less than that of the first, second and third openings and each adapted to receive the end of the axis of a fork and a cover (7) fixed to the bottom of the housing and outside the same, such that the forward gears are installed between the outer face of the housing and the cover, **characterised in that** the first opening (2) is sealed by a part (9) comprising a bored body (91) extended by an end-piece (92) adapted to allow the passage of oil coming from the space comprised between the cover and the bottom of the housing towards the inside of the housing and **in that** the bore hole (93) of the body and those of the hollow forward-gear line shafts (3, 4) constitute the sole passages for the oil coming from the space comprised between the cover and the bottom of the housing towards the inside of the housing.

2. Gear box according to Claim 1, **characterised in that** the forward gears installed outside the gear box housing are respectively the drive gear and the counterdriven gear of the fifth forward gear.

3. Gear box according to Claim 1 or 2, **characterised in that** the sealing part (9) of the first opening is a cast solid part.

4. Gear box according to any one of the preceding claims, **characterised in that** the part (9) for sealing the first opening is a moulded part made of synthetic material.

5. Gear box according to any one of the preceding claims, **characterised in that** the end-piece is bevelled in its outermost part, the shape of which is suitable for substantially fitting that of the cover.

6. Gear box according to any one of the preceding claims, **characterised in that** the cover (7) is metal.
